(19) **Europäisches Patentamt / European Patent Office / Office européen des brevets**

(11) **EP 4 502 877 A1**

(12) **EUROPEAN PATENT APPLICATION**
published in accordance with Art. 153(4) EPC

(43) Date of publication:
05.02.2025 Bulletin 2025/06

(21) Application number: 22935494.9

(22) Date of filing: 31.03.2022

(51) International Patent Classification (IPC):
*G06N 20/00* (2019.01)

(52) Cooperative Patent Classification (CPC):
G06N 20/00

(86) International application number:
PCT/JP2022/016770

(87) International publication number:
WO 2023/188354 (05.10.2023 Gazette 2023/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **FUJITSU LIMITED**
**Kawasaki-shi, Kanagawa 211-8588 (JP)**

(72) Inventor: **HIGUCHI, Yuji**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MODEL TRAINING METHOD, MODEL TRAINING PROGRAM, AND INFORMATION PROCESSING DEVICE**

(57) A machine learning model having membership estimation resistance may be efficiently generated by executing a process including: inputting a plurality of pieces of processed data, each of which is associated with a ground truth label and each of which is different from basic data, to a first class classification model trained using the basic data associated with the ground truth label to obtain a confidence level of the ground truth label for each of the plurality of pieces of processed data; specifying the processed data that corresponds to the confidence level lower than a first reference value; and training a new class classification model using the specified processed data as training data.

## FIG. 4

## Description

TECHNICAL FIELD

The present invention relates to a model training method, a model training program, and an information processing apparatus.

BACKGROUND ART

In recent years, systems using machine learning have been rapidly developed and used. Meanwhile, security problems unique to the systems using machine learning have also been found. For example, a membership estimation attack is known as one of the security problems.

In the membership estimation attack, for example, it is estimated whether or not data focused on by an attacker is included in training data of a machine learning model as an attack target.

As a defensive measure against the membership estimation attack, a technique of training a machine learning model using pseudo data as training data is known. The pseudo data may be generated by adding noise to basic data, or may be generated by machine learning from the basic data.

Note that a technique of sorting the training data is known. As an example, a training data sorting device for sorting out the training data that may shorten a training time is known (see Patent Document 1).

A characteristic of being hardly estimated whether or not specific data is included in the training data may be referred to as resistance to a membership estimation attack. Various kinds of pseudo data may include data that affects the resistance to the membership estimation attack (hereinafter abbreviated as "membership estimation resistance").

Conventionally, a machine learning model is trained by dividing pseudo data into several groups, and evaluation of each group is repeated by checking the membership estimation resistance of each group. Such processing is performed several times by changing the grouping method, and data commonly used in a low-resistance model is specified as data that lowers the membership estimation resistance and is excluded from the training data.

CITATION LIST

PATENT DOCUMENT

Patent Document 1: Japanese Laid-open Patent Publication No. 2021-107970
Patent Document 2: Japanese Laid-open Patent Publication No. 2019-159961
Patent Document 3: U.S. Patent Application Publication No. 2007/0143284

SUMMARY OF INVENTION

TECHNICAL PROBLEM

However, it takes a lot of time for calculation to specify the data that lowers the membership estimation resistance based on such conventional technique. Thus, there is a problem that it is difficult to efficiently train a machine learning model to improve the membership estimation resistance.

In one aspect, an object of the present invention is to efficiently generate a machine learning model having membership estimation resistance.

SOLUTION TO PROBLEM

In view of the above, this model training method causes a computer to execute a process including: inputting a plurality of pieces of processed data, each of which is associated with a ground truth label and each of which is different from basic data, to a first class classification model trained using the basic data associated with the ground truth label to obtain a confidence level of the ground truth label for each of the plurality of pieces of processed data; specifying the processed data that corresponds to the confidence level lower than a first reference value; and training a new class classification model using the specified processed data as training data.

ADVANTAGEOUS EFFECTS OF INVENTION

According to an embodiment, a machine learning model having membership estimation resistance may be efficiently generated.

BRIEF DESCRIPTION OF DRAWINGS

FIG. 1 is a diagram exemplifying a hardware configuration of an information processing apparatus as an example of an embodiment.
FIG. 2 is a diagram exemplifying a functional configuration of the information processing apparatus as an example of the embodiment.
FIG. 3 is a diagram for explaining an example of a second training execution unit and a second confidence level vector acquisition unit in the information processing apparatus as an example of the embodiment.
FIG. 4 is a diagram for explaining processing contents in the information processing apparatus as an example of the embodiment.
FIG. 5 is a diagram illustrating an outline of a training phase and an inference phase of a class classification model in the information processing apparatus as an example of the embodiment.
FIG. 6 is a flowchart for explaining a model training method in the information processing apparatus as an example of the embodiment.
FIG. 7 is a flowchart for explaining a first example of a method for specifying pseudo data in the information processing apparatus as an example of the embodiment.
FIG. 8 is a flowchart for explaining a second example of the method for specifying pseudo data in the information processing apparatus as an example of the embodiment.

DESCRIPTION OF EMBODIMENTS

Hereinafter, an embodiment of the present model training method, model training program, and information processing apparatus will be described with reference to the drawings. Note that the embodiment to be described below is merely an example, and there is no intention to exclude application of various modifications and techniques not explicitly described in the embodiment. In other words, the present embodiment may be variously modified and implemented in a range without departing from the spirit thereof. In addition, each drawing is not intended to include only constituent elements illustrated in the drawings, and may include another function and the like.

(A) Configuration

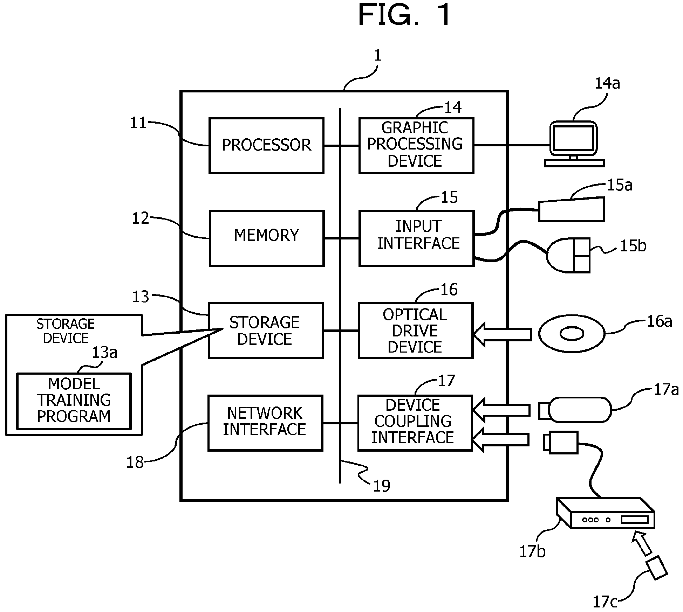

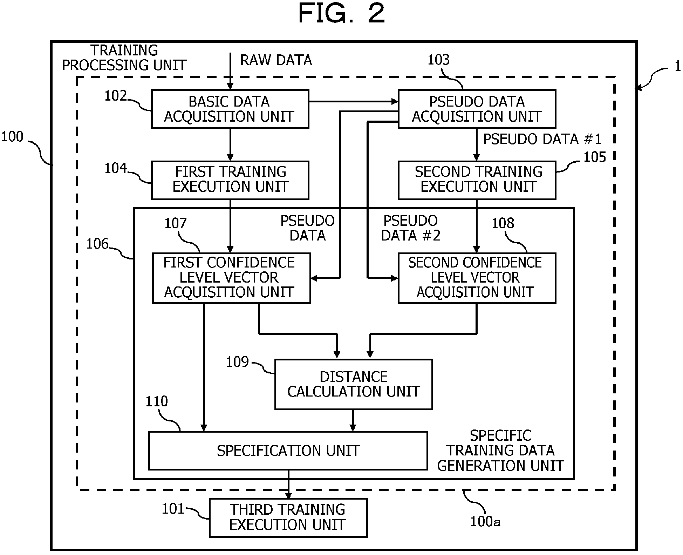

FIG. 1 is a diagram exemplifying a hardware configuration of an information processing apparatus 1 as an example of an embodiment.
As illustrated in FIG. 1, the information processing apparatus 1 includes, as constituent elements, a processor 11, a memory 12, a storage device 13, a graphic processing device 14, an input interface 15, an optical drive device 16, a device coupling interface 17, and a network interface 18, for example. Those constituent elements 11 to 18 are configured to be communicable with each other via a bus 19. The information processing apparatus 1 is an exemplary computer.
The processor (control unit) 11 controls the entire information processing apparatus 1. The processor 11 may be a multiprocessor. For example, the processor 11 may be any one of a central processing unit (CPU), a micro processing unit (MPU), a digital signal processor (DSP), an application specific integrated circuit (ASIC), a programmable logic device (PLD), a field programmable gate array (FPGA), and a graphics processing unit (GPU). Furthermore, the processor 11 may be a combination of two or more types of elements of the CPU, MPU, DSP, ASIC, PLD, FPGA, and GPU.
The processor 11 executes a control program (model training program 13a) to implement a function as the training processing unit 100 exemplified in FIG. 2.
For example, the information processing apparatus 1 executes the model training program 13a and an operating system (OS) program recorded in a computer-readable non-transitory recording medium to implement the function as the training processing unit 100.
Programs in which processing content to be executed by the information processing apparatus 1 is described may be recorded in various kinds of recording media. For example, the model training program 13a to be executed by the information processing apparatus 1 may be stored in the storage device 13. The processor 11 loads at least a part of the model training program 13a in the storage device 13 into the memory 12, and executes the loaded model training program 13a.

Furthermore, the model training program 13a to be executed by the information processing apparatus 1 (processor 11) may be recorded in a non-transitory portable recording medium, such as an optical disk 16a, a memory device 17a, a memory card 17c, or the like. The model training program 13a stored in the portable recording medium may be executed after being installed in the storage device 13 under the control of the processor 11, for example. Furthermore, the processor 11 may directly read the model training program 13a from the portable recording medium to execute it.

The memory 12 is a storage memory including a read only memory (ROM) and a random access memory (RAM). The RAM of the memory 12 is used as a main storage device of the information processing apparatus 1. The RAM temporarily stores at least a part of the OS program and the control program to be executed by the processor 11. Furthermore, the memory 12 stores various types of data needed for processing by the processor 11.

The storage device 13 is a storage device such as a hard disk drive (HDD), a solid state drive (SSD), a storage class memory (SCM), or the like, and stores various types of data. The storage device 13 is used as an auxiliary storage device of the present information processing apparatus 1. The storage device 13 stores the OS program, the control program, and various types of data. The control program includes the model training program 13a.

A semiconductor storage device such as an SCM, a flash memory, or the like may be used as the auxiliary storage device. Furthermore, redundant arrays of inexpensive disks (RAID) may be configured using a plurality of the storage devices 13.

Furthermore, the storage device 13 may store various types of data obtained or generated by a third training execution unit 101, a basic data acquisition unit 102, a pseudo data acquisition unit 103, a first training execution unit 104, a second training execution unit 105, and a specific training data generation unit 106 to be described later.

The graphic processing device 14 is coupled to a monitor 14a. The graphic processing device 14 displays an image on a screen of the monitor 14a in accordance with an instruction from the processor 11. Examples of the monitor 14a include a display device using a cathode ray tube (CRT), a liquid crystal display device, and the like.

The input interface 15 is coupled to a keyboard 15a and a mouse 15b. The input interface 15 transmits signals sent from the keyboard 15a and the mouse 15b to the processor 11. Note that the mouse 15b is an exemplary pointing device, and another pointing device may be used. Examples of the another pointing device include a touch panel, a tablet, a touch pad, a track ball, and the like.

The optical drive device 16 reads data recorded in the optical disk 16a using laser light or the like. The optical disk 16a is a non-transitory portable recording medium in which data is recorded in a readable manner by reflection of light. Examples of the optical disk 16a include a digital versatile disc (DVD), a DVD-RAM, a compact disc read only memory (CD-ROM), a CD-recordable (R)/rewritable (RW), and the like.

The device coupling interface 17 is a communication interface for coupling a peripheral device to the information processing apparatus 1. For example, the memory device 17a and a memory reader/writer 17b may be coupled to the device coupling interface 17. The memory device 17a is a non-transitory recording medium equipped with a function of communicating with the device coupling interface 17, and is, for example, a universal serial bus (USB) memory. The memory reader/writer 17b writes data to the memory card 17c, or reads data from the memory card 17c. The memory card 17c is a card-type non-transitory recording medium.

The network interface 18 is coupled to a network (not illustrated). The network interface 18 may be coupled to another information processing apparatus, a communication device, and the like via the network. For example, data related to a disease or the like may be input via the network.

FIG. 2 is a diagram exemplifying a functional configuration of the information processing apparatus 1 as an example of the embodiment. As illustrated in FIG. 2, the information processing apparatus 1 has the function as the training processing unit 100.

In the information processing apparatus 1, the processor 11 executes the control program (model training program 13a) to implement the function as the training processing unit 100.

The training processing unit 100 implements a learning process (training process) in machine learning using training data. In other words, the information processing apparatus 1 functions as a training apparatus that trains a machine learning model with the training processing unit 100.

The training processing unit 100 includes the third training execution unit 101 that implements a training process in machine learning using training data (teaching data) to which a ground truth label is assigned. In the present example, the training processing unit 100 includes a data sorting unit 100a that sorts (specifies) training data to be input to the third training execution unit 101. The "ground truth label" may be ground truth information assigned to individual pieces of data.

The training data to be input to the third training execution unit 101 may be a plurality of pieces of pseudo data generated by adding noise or the like to raw data to protect against a membership estimation attack. The "pseudo data" is an example of processed data obtained by processing original data.

The data sorting unit 100a removes data that affects membership estimation resistance, that is, data that lowers the membership estimation resistance, from among the plurality of pieces of pseudo data. The data sorting unit 100a sorts out training data to be used for a new class classification model (third class classification model C) to be trained in the third training execution unit 101.

A class classification model is a machine learning model for classifying data into a plurality of classes. The machine learning model may be, for example, a deep learning model (deep neural network). The neural network may be a hardware circuit, or may be a virtual network by software that connects individual layers virtually constructed on a computer program by the processor 11 or the like.

As illustrated in FIG. 2, the data sorting unit 100a may include the basic data acquisition unit 102, the pseudo data acquisition unit 103, the first training execution unit 104, the second training execution unit 105, and the specific training data generation unit 106.

The basic data acquisition unit 102 obtains basic data. The basic data is data (teaching data) associated with a ground truth label. The basic data is training data to be used by the first training execution unit 104 to implement a training process in machine learning.

The basic data may be data generated (processed) based on the collected unprocessed raw data, or may be the raw data itself. However, the basic data is preferably data processed based on the raw data rather than the raw data itself. When the raw data is data having a degree of confidentiality equal to or higher than a predetermined level, such as disease-related data, it is preferable not to use the raw data itself for training as much as possible from the viewpoint of maintaining confidentiality. However, the raw data may be used as the basic data depending on the content of data.

The basic data acquisition unit 102 may obtain the basic data generated by an external device, or may generate the basic data in the information processing apparatus 1.

The pseudo data acquisition unit 103 obtains a plurality of pieces of pseudo data. The pseudo data acquisition unit 103 may generate the pseudo data based on the raw data.

Each piece of the pseudo data is an example of the processed data generated (processed) based on the collected unprocessed raw data. The pseudo data acquisition unit 103 may generate the pseudo data using various known methods. For example, the pseudo data may be generated by adding noise to the raw data. As an example, the pseudo data acquisition unit 103 may generate each piece of the pseudo data by adding random noise to the raw data. The noise may be Gaussian noise or Laplace noise. As an example, each piece of the pseudo data may be data obtained by processing the basic data.

Furthermore, the pseudo data acquisition unit 103 may train a generation model by machine learning such as a generative adversarial network (GAN) with raw data, and may generate pseudo data using the trained model. Furthermore, the pseudo data acquisition unit 103 may generate the pseudo data using dynamic programming (DP).

A processing degree of each piece of the pseudo data may be larger than the processing degree of the basic data. The processing degree means a degree of processing from the raw data. As an example, the processing degree is larger as the noise added to the raw data is larger.

Each of the plurality of pieces of pseudo data is associated with a ground truth label. However, each of the plurality of pieces of pseudo data is different from the basic data. The plurality of pieces of pseudo data includes training data (teaching data) to be used by the second training execution unit 105 to implement the training process in machine learning.

The pseudo data acquisition unit 103 may obtain pseudo data generated by a device outside the information processing apparatus 1, or may generate pseudo data in the information processing apparatus 1. In particular, the pseudo data acquisition unit 103 may generate a plurality of pieces of pseudo data in the information processing apparatus 1 based on the basic data obtained by the basic data acquisition unit 102.

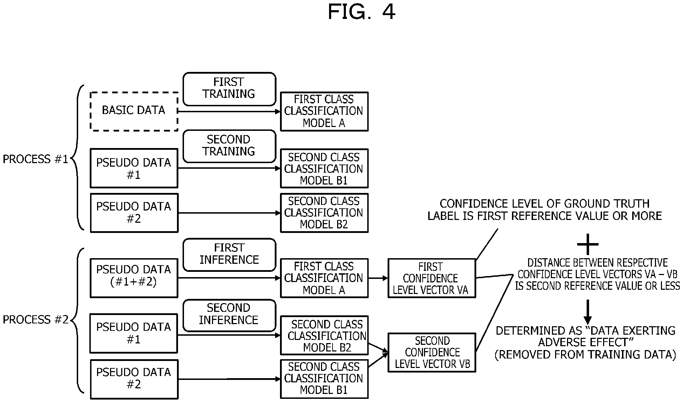

The first training execution unit 104 carries out training of a first class classification model A (model A: see FIG. 4) using the basic data as training data, and generates a trained first class classification model A. The first class classification model A is an example of the first class classification model. For example, the basic data is configured as a combination of input data x and correct output data y. The first training execution unit 104 preferably carries out training of the first class classification model A using a plurality of pieces of basic data. The first training execution unit 104 may carry out the training of the first class classification model A using a known method.

The training of the first class classification model A carried out by the first training execution unit 104 using the basic data may be referred to as first training. Furthermore, the class classification model before being trained by the first training execution unit 104 may be an empty machine learning model. The machine learning model may be simply referred to as a model.

The second training execution unit 105 carries out training of a second class classification model B (model B) using a plurality of pieces of pseudo data as training data, and generates a trained second class classification model B. The second class classification model B is an exemplary second class classification model. For example, each of the plurality of pieces of pseudo data is configured as a combination of the input data x and the correct output data y. The second training execution unit 105 may carry out the training of the second class classification model B using a known method.

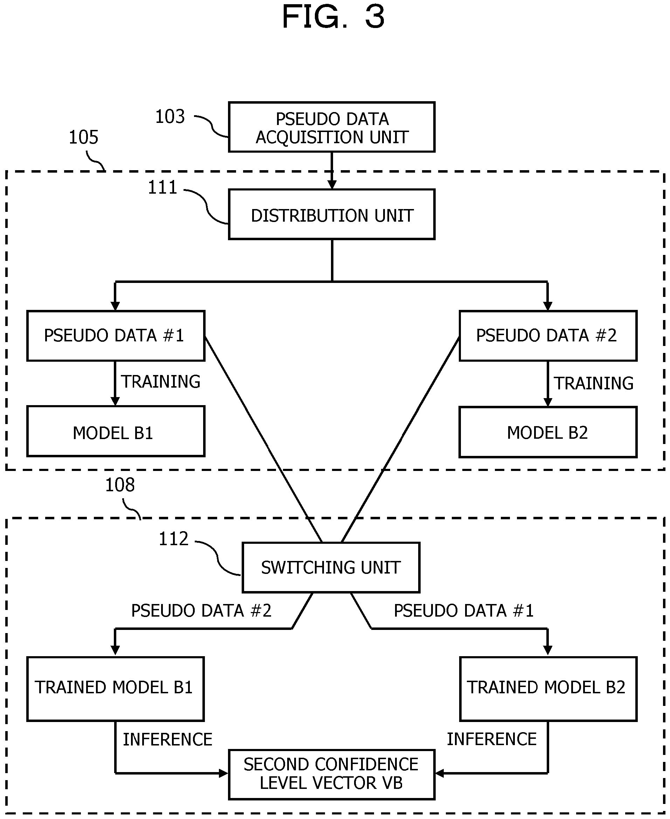

The second training execution unit 105 may train the second class classification model B (e.g., model B1: see FIG. 3) using, as training data, two or more pieces of first pseudo data (e.g., pseudo data #1 to be described later: see FIG. 3) among the plurality of pieces of pseudo data.

The training of the second class classification model B carried out by the second training execution unit 105 using the plurality of pieces of pseudo data may be referred to as second training. Furthermore, the class classification model before being trained by the second training execution unit 105 may be an empty machine learning model same as the class classification model before being trained by the first training execution unit 104.

Furthermore, the second training execution unit 105 may train a plurality of (e.g., two) second class classification models B (e.g., models B1 and B2) using the pseudo data as training data, and may generate a plurality of trained second class classification models B.

FIG. 3 is a diagram for explaining exemplary processing of the second training execution unit 105 and second confidence level vector acquisition unit 108 in the information processing apparatus 1 as an example of the embodiment.

In the example illustrated in FIG. 3, the second training execution unit 105 trains the two second class classification models B1 and B2. The second training execution unit 105 may include a distribution unit 111. The distribution unit 111 distributes the plurality of pieces of pseudo data obtained from the pseudo data acquisition unit 103 into a plurality of groups. The distribution unit 111 may randomly distribute the plurality of pieces of pseudo data into the plurality of groups.

In the example illustrated in FIG. 3, the pseudo data is distributed to pseudo data #1 (first conversion data) belonging to one group and to pseudo data #2 (second conversion data) belonging to another group different from the one group. However, the pseudo data may be distributed into three or more groups. Each of the pseudo data #1 and the pseudo data #2 includes two or more pieces of pseudo data.

The second training execution unit 105 trains the second class classification model B1 using the pseudo data #1. The second training execution unit 105 trains the second class classification model B2 using the pseudo data #2.

The specific training data generation unit 106 illustrated in FIG. 2 specifies (sorts out, generates) training data to be used by the third training execution unit 101 to implement the training process in the machine learning. The specific training data generation unit 106 may remove data that may lower the membership estimation resistance from among the plurality of pieces of pseudo data. The specific training data generation unit 106 may specify the training data that maintains the membership estimation resistance from among the plurality of pieces of pseudo data.

The specific training data generation unit 106 may sort out the training data of the third training execution unit 101 using the trained first class classification model A, the trained second class classification model B, and the plurality of pieces of pseudo data to be evaluated.

Note that the specific training data generation unit 106 may obtain the trained first class classification model A, the trained second class classification model B, and the plurality of pieces of pseudo data to be evaluated from the outside of the information processing apparatus 1. In this case, the functions as the basic data acquisition unit 102, the pseudo data acquisition unit 103, the first training execution unit 104, and the second training execution unit 105 may be provided in a device outside the present information processing apparatus 1.

As illustrated in FIG. 2, the specific training data generation unit 106 includes a first confidence level vector acquisition unit 107, a second confidence level vector acquisition unit 108, a distance calculation unit 109, and a specification unit 110.

The first confidence level vector acquisition unit 107 inputs a plurality of pieces of pseudo data to the first class classification model A to obtain a first confidence level vector VA for each of the plurality of pieces of pseudo data. The generation of the first confidence level vector VA is one of inference processing using the trained first class classification model A, and is referred to as first inference.

The confidence level vector includes, as an element, a confidence level of each label, which is a data determination result by a class classification model. A "label" may be an item for classifying data by a class classification model. A confidence level is a probability that a set of data of interest and a label (item) is correct.

As an example, when the class classification model classifies the input data into four elements, for example, individual labels of an element (A), an element (B), an element (C), and an element (D), the confidence level is calculated for each label. Moreover, a confidence level of the ground truth label of the input data is calculated. The confidence level vector includes the confidence level of each label as an element.

The first confidence level vector acquisition unit 107 is an exemplary confidence level acquisition unit that obtains a confidence level of the ground truth label for each of a plurality of pieces of pseudo data by inputting the plurality of pieces of pseudo data to the first class classification model A.

The second confidence level vector acquisition unit 108 obtains, for each of two or more pieces of second processed data, a second confidence level vector VB having a confidence level of each of a plurality of labels, which is a determination result, as an element. The generation of the second confidence level vector VB is one of inference processing using the trained second class classification model B, and is referred to as second inference.

The second confidence level vector acquisition unit 108 inputs pseudo data to the second class classification model B to perform inference, and obtains the second confidence level vector VB.

When the second training execution unit 105 trains a plurality of second class classification models B, the second confidence level vector acquisition unit 108 inputs pseudo data to each of those plurality of second class classification models B to perform inference, and obtains the second confidence level vector VB.

The second confidence level vector acquisition unit 108 may include a switching unit 112. The switching unit 112 exchanges (swaps) the pseudo data to be input to the respective second class classification models B1 and B2 between a training phase and an evaluation phase.

In the example illustrated in FIG. 3, the switching unit 112 inputs, as pseudo data to be evaluated, the pseudo data #2 to the second class classification model B1 trained using the pseudo data #1. On the other hand, the switching unit 112 inputs, as pseudo data to be evaluated, the pseudo data #1 to the second class classification model B2 trained using the pseudo data #2.

As described above, by the switching unit 112 exchanging the pseudo data to be input to the second class classification models B1 and B2 between the training phase and the evaluation phase, it becomes possible to avoid evaluation of the pseudo data #1 same as that in the training phase by the second class classification model B1 trained using the pseudo data #1. Likewise, it becomes possible to avoid evaluation of the pseudo data #2 same as that at the time of training by the second class classification model B2 trained using the pseudo data #2.

When the same data is used in the training phase and the evaluation phase, the confidence level of the ground truth label in the second confidence level vector VB becomes higher beyond necessity due to over-training or the like, and the distance |VA - VB| may not reflect the membership estimation resistance. According to the configuration of FIG. 3, the membership estimation resistance may be easily evaluated based on the distance |VA - VB|.

By the switching unit 112 exchanging (swapping) the pseudo data to be input to the respective second class classification models B1 and B2, the membership estimation resistance may be evaluated for the entire pseudo data #1 and pseudo data #2.

In order to generate the second confidence level vector VB, the second confidence level vector acquisition unit 108 may use the second class classification models B1 and B2 (see FIG. 3) trained using two or more pieces of the first pseudo data (e.g., pseudo data #1 and #2: see FIG. 3) among the plurality of pieces of pseudo data.

The second confidence level vector acquisition unit 108 inputs two or more pieces of second pseudo data (e.g., pseudo data #1 and #2 to be described later: see FIG. 3) among the plurality of pieces of pseudo data to the trained second class classification models B2 and B1 (see FIG. 3) to generate the second confidence level vector VB (see FIG. 4). The first pseudo data (e.g., pseudo data #1) and the second pseudo data (e.g., pseudo data #2) may be different from each other.

The distance calculation unit 109 illustrated in FIG. 2 obtains a distance between the first confidence level vector VA and the second confidence level vector VB.

The distance may be a Kullback-Leibler (KL) distance, or may be an L1 distance (also referred to as a Manhattan distance). As an example, it is assumed that the first confidence level vector VA is VA(p1, ..., pn) (where p1, ..., pn represent confidence levels of individual labels in the first confidence level vector VA). It is assumed that the second confidence level vector VB is VB(q1, ..., qn) (where q1, ..., qn represent confidence levels of individual labels in the second confidence level vector VB).

The KL distance |VA - VB| between the first confidence level vector VA and the second confidence level vector VB is given by the following expression (1).

$$\mathrm{sqrt}((p1 - q1)^2 + \ldots + (pn - qn)^2) \ldots (1)$$

The L1 distance |VA - VB| between the first confidence level vector VA and the second confidence level vector VB is given by the following expression (2).

$$|p1 - q1| + \ldots + |pn - qn| \ldots (2)$$

The specification unit 110 specifies the pseudo data to be input to the third training execution unit 101 from among the plurality of pieces of pseudo data. The specification unit 110 may specify the pseudo data based on the first confidence level vector VA.

As an example, the specification unit 110 may specify the pseudo data based on the first confidence level vector VA. The specification unit 110 determines whether or not the confidence level of the ground truth label of the first confidence level vector VA is lower than a first reference value. The specification unit 110 may specify the pseudo data corresponding to the confidence level lower than the first reference value as data that does not adversely affect the membership estimation resistance. The pseudo data specified as the data that does not adversely affect the membership estimation resistance in this manner may be used as training data for training the third class classification model C (model C) using the third training execution unit 101. The first reference value may be a predetermined threshold.

The specification unit 110 may further specify the pseudo data based on the distance |VA - VB| between the first confidence level vector VA and the second confidence level vector VB. For example, the specification unit 110 determines whether or not the distance |VA - VB| is a value larger than a second reference value. The specification unit 110 may specify pseudo data in which the distance |VA - VB| is larger than the second reference value as data that does not adversely affect the membership estimation resistance even if the pseudo data corresponds to the confidence level equal to or higher than the first reference value. The specification unit 110 may use the pseudo data specified as the data that does not adversely affect the membership estimation resistance in this manner as the training data for training the third class classification model C. That is, the specification unit 110 may specify, as the training data for the third class classification model C, pseudo data that satisfies a condition that the confidence level of the ground truth label of the first confidence level vector VA is lower than the first reference value or that the distance |VA - VB| is a value larger than the second reference value.

In other words, in the present embodiment, the specification unit 110 removes, from the plurality of pieces of pseudo data, pseudo data in which the confidence level of the ground truth label of the first confidence level vector VA is equal to or higher than the first reference value and the distance |VA - VB| is equal to or smaller than the second reference value. The pseudo data that increases the confidence level of the ground truth label of the first confidence level vector VA and decreases the distance |VA - VB| may lower the membership estimation resistance. Therefore, the specification unit 110 is enabled to remove and forestall the pseudo data that may lower the membership estimation resistance.

However, only when the confidence level of the ground truth label of the first confidence level vector VA is lower than the first reference value and the distance |VA - VB| is a value larger than the second reference value, the specification unit 110 may specify the corresponding pseudo data as the training data for the third class classification model C.

The third training execution unit 101 trains the third class classification model C using the pseudo data specified by the specification unit 110 as training data. The third class classification model C is a model actually used for estimation. Each piece of the pseudo data specified by the specification unit 110 is configured as, for example, a combination of the input data x and the correct output data y.

The training of the third class classification model C carried out by the third training execution unit 101 using a plurality of pieces of specified pseudo data may be referred to as third training. Furthermore, the class classification model before being trained by the third training execution unit 101 may be an empty machine learning model same as the class classification model at a previous stage before being trained by the first training execution unit 104 or the second training execution unit 105.

FIG. 4 is a diagram for explaining processing contents of the first training execution unit 104, the second training execution unit 105, the first confidence level vector acquisition unit 107, and the second confidence level vector acquisition unit 108 in the information processing apparatus 1 as an example of the embodiment.

This FIG. 4 illustrates an exemplary case where the second training execution unit 105 trains the two second class classification models B1 and B2 and the second confidence level vector acquisition unit 108 obtains the second confidence level vector VB using those plurality of second class classification models B1 and B2.

In this example illustrated in FIG. 4, the processing contents are roughly divided into a process #1 and a process #2. The process #1 is a training phase of the first class classification model A and the second class classification models B1 and B2. The process #2 is an evaluation phase of the pseudo data #1 and #2. The evaluation phase is an example of an inference phase by the first class classification model A and the second class classification models B1 and B2.

The process #1 includes the first training and the second training. In the first training, the first training execution unit 104 trains the first class classification model A using the basic data as training data. In the second training, the second training execution unit 105 trains the second class classification model B1 using the pseudo data #1 as training data. The second training execution unit 105 further trains, in the second training, the second class classification model B2 using the pseudo data #2 as training data.

The process #2 includes the first inference and the second inference. In the first inference, the first confidence level vector acquisition unit 107 inputs the pseudo data (both the pseudo data #1 and the pseudo data #2) to the trained first class classification model A to obtain the first confidence level vector VA.

In the second inference, the second confidence level vector acquisition unit 108 inputs the pseudo data #1 to the trained second class classification model B2. As a result, the second confidence level vector acquisition unit 108 obtains the second confidence level vector VB for the pseudo data #1.

In the second inference, the second confidence level vector acquisition unit 108 inputs the pseudo data #2 to the trained second class classification model B1. As a result, the second confidence level vector acquisition unit 108 obtains the second confidence level vector VB for the pseudo data #2.

In this manner, the second confidence level vector acquisition unit 108 is enabled to obtain the second confidence level vector VB for the pseudo data (both the pseudo data #1 and the pseudo data #2).

The specification unit 110 removes the pseudo data in which the confidence level of the ground truth label of the first confidence level vector VA is equal to or higher than the first reference value and the distance |VA - VB| between the first confidence level vector VA and the second confidence level vector VB is equal to or smaller than the second reference value. The specification unit 110 may determine the pseudo data that affects the membership estimation resistance based on the confidence level of the ground truth label and the distance |VA - VB|. In other words, the specification unit 110 specifies the pseudo data to be used by the third training execution unit 101 as the training data for training the third class classification model C.

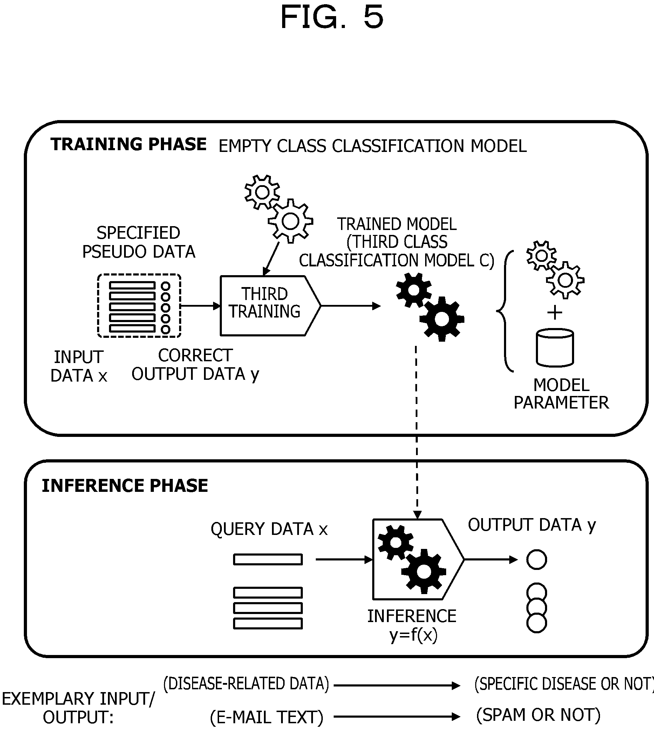

FIG. 5 is a diagram illustrating an outline of the training phase and the inference phase of the class classification model in the information processing apparatus 1 as an example of the embodiment.

The process illustrated in FIG. 5 includes a training phase. The training phase includes third training for training the third class classification model C using the pseudo data specified by the process illustrated in FIG. 4 as training data. The third class classification model C is a new class classification model, and is a model actually used in the inference phase.

The third training execution unit 101 sets parameters of the machine learning model by training an empty machine learning model using the specified pseudo data as training data.

In the inference phase, when query data x to be subject to class classification is input to the third class classification model C, the third class classification model C outputs a class classification result as output data y.

For example, the information processing apparatus 1 according to the present embodiment may be utilized as a device that infers whether or not there is a suspicion of a specific disease by inputting, as query data x, disease-related data or the like to the third class classification model C in the inference phase. However, the information processing apparatus 1 is not limited to this case, and may be utilized as various class classification devices such as a device that infers whether or not e-mail text is spam.

(B) Operation

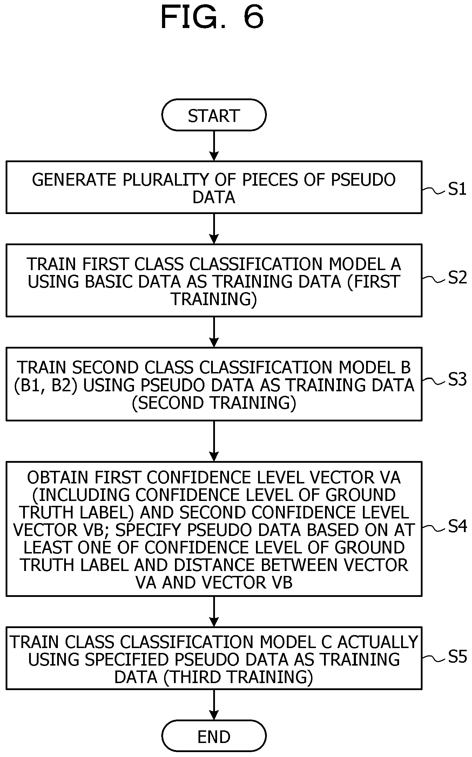

A method for training a class classification model (machine learning model) in the information processing apparatus 1 as an example of the embodiment configured as described above will be described with reference to a flowchart (steps S1 to S5) illustrated in FIG. 6.

In step S1, the pseudo data acquisition unit 103 generates a plurality of pieces of pseudo data. The pseudo data acquisition unit 103 may generate the plurality of pieces of pseudo data based on the basic data. Information included in the pseudo data is stored in a predetermined storage area such as the storage device 13.

In step S2, the first training execution unit 104 executes the first training for training the first class classification model A using the basic data as training data. The empty class classification model before executing the first training may be stored in the storage device 13 in advance. The trained first class classification model A may be stored in the storage device 13.

In step S3, the second training execution unit 105 executes the second training for training the second class classification model B (B1 and B2) using the plurality of pieces of pseudo data as training data. The empty class classification model before executing the second training may be stored in the storage device 13 in advance.

In step S4, the data sorting unit 100a specifies (sorts out) the pseudo data to be input to the third training execution unit 101 to train the third class classification model C.

Specifically, the first confidence level vector acquisition unit 107 inputs the plurality of pieces of pseudo data to the first class classification model A to generate a first confidence level vector VA for each of the plurality of pieces of pseudo data. The first confidence level vector VA may include, as an element, a confidence level of each of a plurality of labels, which is a determination result. In particular, the first confidence level vector VA includes the confidence level of the ground truth label.

Likewise, the second confidence level vector acquisition unit 108 inputs the plurality of pieces of pseudo data to the second class classification model B to generate a second confidence level vector VB for each of the plurality of pieces of pseudo data.

The specification unit 110 specifies the pseudo data based on at least one of the confidence level of the ground truth label inferred by the first class classification model A and the distance $|VA - VB|$.

In step S5, the third training execution unit 101 executes the third training for training the third class classification model C using the pseudo data specified in step S4 as training data. The third class classification model C trained in this manner has the membership estimation resistance.

Note that the pseudo data acquisition unit 103 may obtain a plurality of pieces of pseudo data generated by a device outside the information processing apparatus 1. Furthermore, the information processing apparatus 1 may obtain the first class classification model A and the second class classification model B generated by a device outside the information processing apparatus 1. In those cases, the processing of steps S1, S2, and S3 may be omitted.

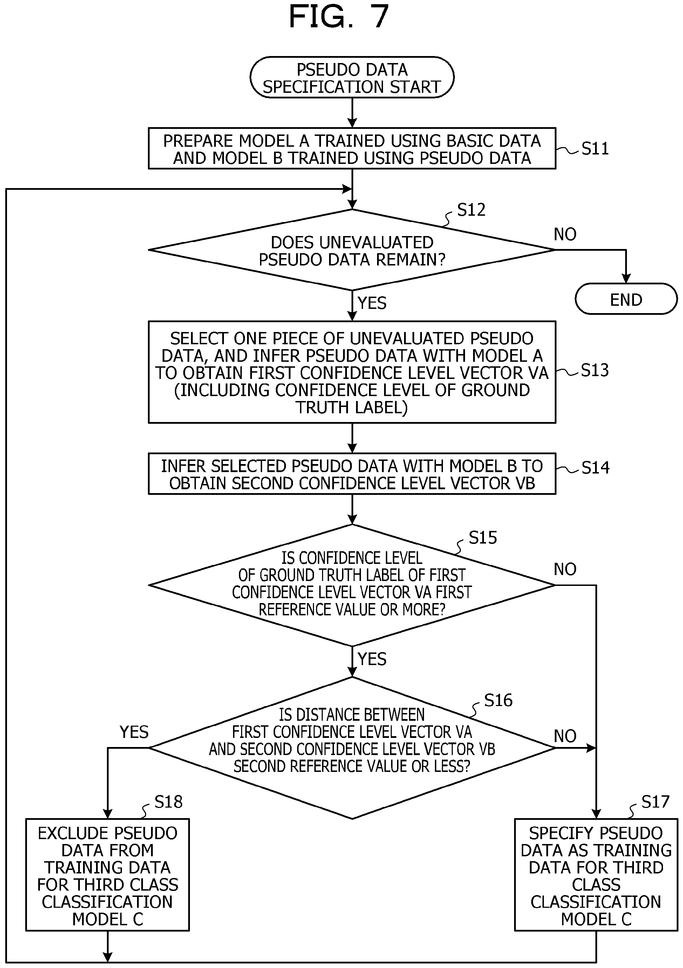

FIG. 7 is a flowchart (steps S11 to S18) for explaining a first example of a method for specifying the pseudo data in the information processing apparatus 1 as an example of the embodiment. A flowchart illustrated in FIG. 7 is an example of the processing of step S4 in FIG. 6.

In step S11, the first class classification model A trained using only the basic data and the second class classification model B trained using only the pseudo data are prepared.

The data sorting unit 100a determines whether unevaluated pseudo data remains (step S12). As a result of the determination, if no unevaluated pseudo data remains (see NO route of step S12), the process for specifying the pseudo data is terminated. If unevaluated pseudo data remains (see YES route of step S12), the process proceeds to step S13.

In step S13, the first confidence level vector acquisition unit 107 selects one piece of the unevaluated pseudo data from among the plurality of pieces of pseudo data. The first confidence level vector acquisition unit 107 inputs the selected pseudo data to the first class classification model A to perform inference, thereby obtaining the first confidence level vector VA. The first confidence level vector VA includes the confidence level of the ground truth label.

In step S14, the second confidence level vector acquisition unit 108 inputs the pseudo data selected in step S13 to the second class classification model B to perform inference, thereby obtaining the second confidence level vector VB. Note that, in the processing of step S14, the second confidence level vector VB may be obtained by preparing a plurality of second class classification models B1 and B2 and exchanging (swapping) the pseudo data to be input to the respective second class classification models B1 and B2 between the training case and the evaluation case, as illustrated in FIG. 4.

In step S15, the specification unit 110 determines whether the confidence level of the ground truth label in the first confidence level vector VA is equal to or higher than the first reference value. If the confidence level of the ground truth label is equal to or higher than the first reference value (see YES route of step S15), the process proceeds to step S16. On the other hand, if the confidence level of the ground truth label is lower than the first reference value (see NO route of step S15), the process proceeds to step S17.

In step S16, the specification unit 110 determines whether or not the distance $|VA - VB|$ between the first confidence level vector VA and the second confidence level vector VB is equal to or smaller than the second reference value. If the distance $|VA - VB|$ is a value larger than the second reference value (see NO route of step S16), the process proceeds to step S17. If the distance $|VA - VB|$ is equal to or smaller than the second reference value (see YES route of step S16), the process proceeds to step S18.

In step S17, the specification unit 110 specifies the pseudo data as the training data for the third class classification model C, and the process returns to step S12. Thus, the pseudo data is specified as the training data when the confidence level of the ground truth label of the first confidence level vector VA is lower than the first reference value and when the distance $|VA - VB|$ is a value larger than the second reference value even if the confidence level is equal to or higher than the first reference value.

In step S18, the specification unit 110 excludes the pseudo data from the training data for the third class classification model C, and the process returns to step S12. Thus, the pseudo data is excluded from the training data when the confidence level of the ground truth label of the first confidence level vector VA is equal to or higher than the first reference value and the distance $|VA - VB|$ is equal to or smaller than the second reference value.

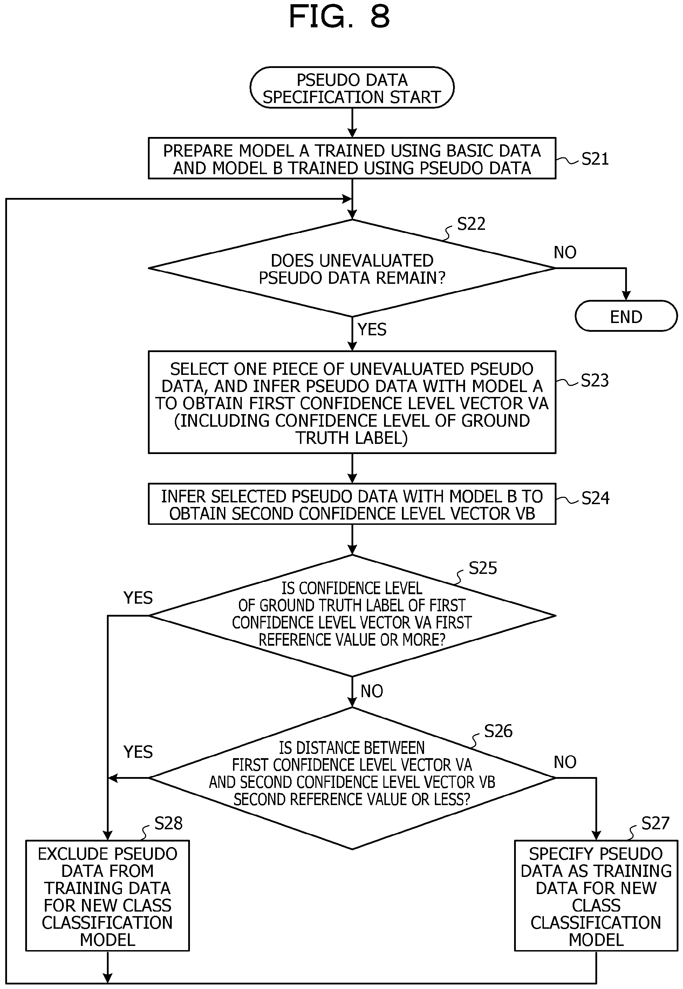

FIG. 8 is a flowchart (steps S21 to S28) for explaining a second example of the method for specifying the pseudo data in the information processing apparatus 1 as an example of the embodiment. A flowchart illustrated in FIG. 8 is another example of the processing of step S4 in FIG. 6.

In FIG. 8, the process of steps S21 to S24 is similar to the process of steps S11 to S14 in FIG. 7, and descriptions of each processing will be omitted.

In step S25, the specification unit 110 determines whether the confidence level of the ground truth label in the first confidence level vector VA is equal to or higher than the first reference value. If the confidence level of the ground truth label is lower than the first reference value (see NO route of step S25), the process proceeds to step S26. On the other hand, if the confidence level of the ground truth label is equal to or higher than the first reference value (see YES route of step S25), the process proceeds to step S28.

In step S26, the specification unit 110 determines whether or not the distance $|VA - VB|$ between the first confidence level vector VA and the second confidence level vector VB is equal to or smaller than the second reference value. If the distance $|VA - VB|$ is a value larger than the second reference value (see NO route of step S26), the process proceeds to step S27. If the distance $|VA - VB|$ is equal to or smaller than the second reference value (see YES route of step S26), the process proceeds to step S28.

In step S27, the specification unit 110 specifies the pseudo data as the training data for the third class classification model C, and the process returns to step S22. Thus, the pseudo data is specified as the training data when the confidence level of the ground truth label of the first confidence level vector VA is lower than the first reference value and the distance $|VA - VB|$ is a value larger than the second reference value.

In step S28, the specification unit 110 excludes the pseudo data from the training data for the third class classification model C, and the process returns to step S22. Thus, it is excluded from the training data when the confidence level of the ground truth label of the first confidence level vector VA is equal to or higher than the first reference value or the distance $|VA - VB|$ is equal to or smaller than the second reference value.

Information included in each of the first class classification model A, the second class classification model B, and the third class classification model C is stored in a predetermined storage area such as the storage device 13.

(C) Effects of One Embodiment

In the method according to the embodiment, a computer executes the processing of inputting a plurality of pieces of pseudo data to the first class classification model A trained using the basic data associated with the ground truth label and obtaining the confidence level of the ground truth label for each of the plurality of pieces of pseudo data. Then, the computer executes the processing of specifying the pseudo data corresponding to the confidence level lower than the first reference value. The computer executes the processing of training the third class classification model C, which is a new class classification model, using the specified pseudo data as training data.

According to the method described above, the third class classification model C is trained by removing the pseudo data that affects the membership estimation resistance. As a result, a machine learning model having the membership estimation resistance may be generated.

Furthermore, the basic data and the processed data are generated based on the collected unprocessed raw data. The processing degree of the processed data from the raw data is larger than that of the basic data. Thus, since each of the plurality of pieces of pseudo data is input to the first class classification model A trained using the basic data closer to the raw data, the pseudo data that affects the membership estimation resistance may be effectively removed.

Furthermore, the information processing apparatus 1 executes the processing of generating the first confidence level vector VA having a confidence level of each of a plurality of labels, which is a determination result, as an element for each of the plurality of pieces of pseudo data by inputting the plurality of pieces of pseudo data to the first class classification model A. The information processing apparatus 1 inputs two or more pieces of the pseudo data #2 (second pseudo data) different from the pseudo data #1 to the second class classification model B1 trained using two or more pieces of the pseudo data #1 (first pseudo data) among the plurality of pieces of pseudo data. As a result, the information processing apparatus 1 generates the second confidence level vector VB having a confidence level of each of a plurality of labels, which is a determination result, as an element for each of the two or more pieces of second processed data. Then, the information processing apparatus 1 executes the processing of obtaining the distance |VA - VB| between the first confidence level vector VA and the second confidence level vector VB. The information processing apparatus 1 executes the processing of specifying, among the pieces of pseudo data, the pseudo data in which the confidence level of the ground truth label of the first confidence level vector VA is equal to or higher than the first reference value and the distance is larger than the second reference value.

According to the method described above, even when the confidence level of the ground truth label of the first confidence level vector VA becomes equal to or higher than the first reference value due to some noise or the like, the pseudo data may be specified as training data by performing a close examination using the distance |VA - VB|.

Furthermore, the pseudo data in which the confidence level of the ground truth label of the first confidence level vector VA is lower than the first reference value and the distance |VA - VB| is a value larger than the second reference value may be specified as the training data. In this case, the pseudo data that affects the membership estimation resistance may be removed.

(D) Others

The disclosed technique is not limited to the embodiment described above, and various modifications may be made without departing from the gist of the present embodiment. For example, each configuration and each processing of the present embodiment may be selected or omitted as needed, or may be appropriately combined.

For example, while the example of using the pseudo data as training data and using the two second class classification models B1 and B2 has been described in the embodiment described above, it is not limited to this, and three or more second class classification models B may be used.

Also in this case, the switching unit 112 performs control such that the pseudo data to be input to each second class classification model B is different between the training phase and the evaluation phase.

REFERENCE SIGNS LIST

| 1 | Information processing apparatus |
|---|---|
| 11 | Processor |
| 12 | Memory |
| 13 | Storage device |
| 13a | Model training program |
| 14 | Graphic processing device |
| 14a | Monitor |
| 15 | Input interface |
| 15a | Keyboard |
| 15b | Mouse |
| 16 | Optical drive device |
| 16a | Optical disk |
| 17 | Device coupling interface |
| 17a | Memory device |

17b     Memory reader/writer
17c     Memory card
18      Network interface
19      Bus
100     Training processing unit
100a    Data sorting unit
101     Third training execution unit
102     Basic data acquisition unit
103     Pseudo data acquisition unit
104     First training execution unit
105     Second training execution unit
106     Specific training data generation unit
107     First confidence level vector acquisition unit
108     Second confidence level vector acquisition unit
109     Distance calculation unit
110     Specification unit
111     Distribution unit
112     Switching unit

**Claims**

1. A model training method for causing a computer to execute a process comprising:

    inputting a plurality of pieces of processed data, each of which is associated with a ground truth label and each of which is different from basic data, to a first class classification model trained using the basic data associated with the ground truth label to obtain a confidence level of the ground truth label for each of the plurality of pieces of processed data;
    specifying the processed data that corresponds to the confidence level lower than a first reference value; and
    training a new class classification model using the specified processed data as training data.

2. The model training method according to claim 1, wherein

    the basic data and the processed data are generated based on collected unprocessed raw data, and
    a processing degree of the processed data from the raw data is larger than the processing degree of the basic data.

3. The model training method according to claim 1 or 2, the method causing the computer to execute the process further comprising:

    inputting the plurality of pieces of processed data to the first class classification model to generate, for each of the plurality of pieces of processed data, a first confidence level vector that has a confidence level of each of a plurality of labels, which is a determination result, as an element;
    inputting, to a second class classification model trained using two or more pieces of first processed data among the plurality of pieces of processed data, two or more pieces of second processed data different from the first processed data among the plurality of pieces of processed data to generate, for each of the two or more pieces of second processed data, a second confidence level vector that has a confidence level of each of a plurality of labels, which is a determination result, as an element;
    obtaining a distance between the first confidence level vector and the second confidence level vector;
    specifying, as the training data to be used to train the new class classification model, the second processed data in which the confidence level of the ground truth label of the first confidence level vector is equal to or higher than the first reference value and the distance is larger than a second reference value among the two or more pieces of second processed data; and
    training the new class classification model using the specified training data.

4. The model training method according to claim 1 or 2, the method causing the computer to execute the process further comprising:

    inputting the plurality of pieces of processed data to the first class classification model to generate, for each of the plurality of pieces of processed data, a first confidence level vector that has a confidence level of each of a plurality of labels, which is a determination result, as an element;

inputting, to a second class classification model trained using two or more pieces of first processed data among the plurality of pieces of processed data, two or more pieces of second processed data different from the first processed data among the plurality of pieces of processed data to generate, for each of the two or more pieces of second processed data, a second confidence level vector that has a confidence level of each of a plurality of labels, which is a determination result, as an element;

obtaining a distance between the first confidence level vector and the second confidence level vector;

specifying, among the two or more pieces of second processed data, the second processed data in which the confidence level of the ground truth label of the first confidence level vector is lower than the first reference value and the distance is larger than a second reference value; and

training the new class classification model using the specified second processed data as the training data.

5. A model training program for causing a computer to execute a process comprising:

inputting a plurality of pieces of processed data, each of which is associated with a ground truth label and each of which is different from basic data, to a first class classification model trained using the basic data associated with the ground truth label to obtain a confidence level of the ground truth label for each of the plurality of pieces of processed data;

specifying the processed data that corresponds to the confidence level lower than a first reference value; and

training a new class classification model using the specified processed data as training data.

6. The model training program according to claim 5, wherein

the basic data and the processed data are generated based on collected unprocessed raw data, and a processing degree of the processed data from the raw data is larger than the processing degree of the basic data.

7. The model training program according to claim 5 or 6, the program causing the computer to execute the process further comprising:

inputting the plurality of pieces of processed data to the first class classification model to generate, for each of the plurality of pieces of processed data, a first confidence level vector that has a confidence level of each of a plurality of labels, which is a determination result, as an element;

inputting, to a second class classification model trained using two or more pieces of first processed data among the plurality of pieces of processed data, two or more pieces of second processed data different from the first processed data among the plurality of pieces of processed data to generate, for each of the two or more pieces of second processed data, a second confidence level vector that has a confidence level of each of a plurality of labels, which is a determination result, as an element;

obtaining a distance between the first confidence level vector and the second confidence level vector;

specifying, as the training data to be used to train the new class classification model, the second processed data in which the confidence level of the ground truth label of the first confidence level vector is equal to or higher than the first reference value and the distance is larger than a second reference value among the two or more pieces of second processed data; and

training the new class classification model using the specified training data.

8. The model training program according to claim 5 or 6, the program causing the computer to execute the process further comprising:

inputting the plurality of pieces of processed data to the first class classification model to generate, for each of the plurality of pieces of processed data, a first confidence level vector that has a confidence level of each of a plurality of labels, which is a determination result, as an element;

inputting, to a second class classification model trained using two or more pieces of first processed data among the plurality of pieces of processed data, two or more pieces of second processed data different from the first processed data among the plurality of pieces of processed data to generate, for each of the two or more pieces of second processed data, a second confidence level vector that has a confidence level of each of a plurality of labels, which is a determination result, as an element;

obtaining a distance between the first confidence level vector and the second confidence level vector;

specifying, among the two or more pieces of second processed data, the second processed data in which the confidence level of the ground truth label of the first confidence level vector is lower than the first reference value and the distance is larger than a second reference value; and

training the new class classification model using the specified second processed data as the training data.

9. An information processing apparatus comprising:
a control unit configured to:

input a plurality of pieces of processed data, each of which is associated with a ground truth label and each of which is different from basic data, to a first class classification model trained using the basic data associated with the ground truth label;

obtain a confidence level of the ground truth label for each of the plurality of pieces of processed data;

specify the processed data that corresponds to the confidence level lower than a first reference value; and

train a new class classification model using the specified processed data as training data.

10. The information processing apparatus according to claim 9, wherein

the basic data and the processed data are generated based on collected unprocessed raw data, and

a processing degree of the processed data from the raw data is larger than the processing degree of the basic data.

11. The information processing apparatus according to claim 9 or 10, wherein the control unit:

inputs the plurality of pieces of processed data to the first class classification model;

generate, for each of the plurality of pieces of processed data, a first confidence level vector that has a confidence level of each of a plurality of labels, which is a determination result, as an element;

inputs, to a second class classification model trained using two or more pieces of first processed data among the plurality of pieces of processed data, two or more pieces of second processed data different from the first processed data among the plurality of pieces of processed data;

generate, for each of the two or more pieces of second processed data, a second confidence level vector that has a confidence level of each of a plurality of labels, which is a determination result, as an element;

obtain a distance between the first confidence level vector and the second confidence level vector;

specify, as the training data to be used to train the new class classification model, the second processed data in which the confidence level of the ground truth label of the first confidence level vector is equal to or higher than the first reference value and the distance is larger than a second reference value among the two or more pieces of second processed data; and

train the new class classification model using the specified training data.

12. The information processing apparatus according to claim 9 or 10, wherein the control unit:

input the plurality of pieces of processed data to the first class classification model;

generate, for each of the plurality of pieces of processed data, a first confidence level vector that has a confidence level of each of a plurality of labels, which is a determination result, as an element;

input, to a second class classification model trained using two or more pieces of first processed data among the plurality of pieces of processed data, two or more pieces of second processed data different from the first processed data among the plurality of pieces of processed data;

generate, for each of the two or more pieces of second processed data, a second confidence level vector that has a confidence level of each of a plurality of labels, which is a determination result, as an element;

obtain a distance between the first confidence level vector and the second confidence level vector;

specify, among the two or more pieces of second processed data, the second processed data in which the confidence level of the ground truth label of the first confidence level vector is lower than the first reference value and the distance is larger than a second reference value; and

train the new class classification model using the specified second processed data as the training data.

# FIG. 1

# FIG. 2

```
TRAINING                RAW DATA                          103
PROCESSING UNIT
                                                                              1
     102        BASIC DATA          ┌──────→    PSEUDO DATA
                ACQUISITION UNIT              ACQUISITION UNIT
100                                                    PSEUDO DATA #1
     104        FIRST TRAINING                SECOND TRAINING        105
                EXECUTION UNIT                EXECUTION UNIT

          107              PSEUDO      PSEUDO        108
     106                   DATA        DATA #2
                FIRST CONFIDENCE              SECOND CONFIDENCE
                LEVEL VECTOR                  LEVEL VECTOR
                ACQUISITION UNIT              ACQUISITION UNIT

          109                    DISTANCE
                                 CALCULATION UNIT
     110
                                                    SPECIFIC
                SPECIFICATION UNIT                  TRAINING DATA
                                                    GENERATION UNIT

     101        THIRD TRAINING
                EXECUTION UNIT              100a
```

# FIG. 3

# FIG. 4

PROCESS #1

BASIC DATA → FIRST TRAINING → FIRST CLASS CLASSIFICATION MODEL A

PSEUDO DATA #1 → SECOND TRAINING → SECOND CLASS CLASSIFICATION MODEL B1

PSEUDO DATA #2 → SECOND CLASS CLASSIFICATION MODEL B2

PROCESS #2

PSEUDO DATA (#1+#2) → FIRST INFERENCE → FIRST CLASS CLASSIFICATION MODEL A → FIRST CONFIDENCE LEVEL VECTOR VA

PSEUDO DATA #1 → SECOND INFERENCE → SECOND CLASS CLASSIFICATION MODEL B2 → SECOND CONFIDENCE LEVEL VECTOR VB

PSEUDO DATA #2 → SECOND CLASS CLASSIFICATION MODEL B1

CONFIDENCE LEVEL OF GROUND TRUTH LABEL IS FIRST REFERENCE VALUE OR MORE

+

DISTANCE BETWEEN RESPECTIVE CONFIDENCE LEVEL VECTORS VA − VB IS SECOND REFERENCE VALUE OR LESS

↓

DETERMINED AS "DATA EXERTING ADVERSE EFFECT" (REMOVED FROM TRAINING DATA)

# FIG. 5

TRAINING PHASE EMPTY CLASS CLASSIFICATION MODEL

SPECIFIED
PSEUDO DATA

THIRD
TRAINING

TRAINED MODEL
(THIRD CLASS
CLASSIFICATION MODEL C)

INPUT
DATA x   CORRECT
OUTPUT DATA y

MODEL
PARAMETER

INFERENCE PHASE

QUERY DATA x   OUTPUT DATA y

INFERENCE
y=f(x)

EXEMPLARY INPUT/
OUTPUT:

(DISEASE-RELATED DATA) ⟶ (SPECIFIC DISEASE OR NOT)

(E-MAIL TEXT) ⟶ (SPAM OR NOT)

# FIG. 6

```
                    START

    GENERATE PLURALITY OF PIECES OF PSEUDO
                     DATA                          S1

    TRAIN FIRST CLASS CLASSIFICATION MODEL A
    USING BASIC DATA AS TRAINING DATA (FIRST       S2
                  TRAINING)

    TRAIN SECOND CLASS CLASSIFICATION MODEL B
    (B1, B2) USING PSEUDO DATA AS TRAINING DATA     S3
              (SECOND TRAINING)

       OBTAIN FIRST CONFIDENCE LEVEL VECTOR VA
       (INCLUDING CONFIDENCE LEVEL OF GROUND
       TRUTH LABEL) AND SECOND CONFIDENCE LEVEL
    VECTOR VB; SPECIFY PSEUDO DATA BASED ON AT      S4
    LEAST ONE OF CONFIDENCE LEVEL OF GROUND
      TRUTH LABEL AND DISTANCE BETWEEN VECTOR
                 VA AND VECTOR VB

    TRAIN CLASS CLASSIFICATION MODEL C ACTUALLY
      USING SPECIFIED PSEUDO DATA AS TRAINING       S5
              DATA (THIRD TRAINING)

                     END
```

# FIG. 7

PSEUDO DATA
SPECIFICATION START

PREPARE MODEL A TRAINED USING BASIC DATA
AND MODEL B TRAINED USING PSEUDO DATA — S11

S12
DOES UNEVALUATED
PSEUDO DATA REMAIN? — NO → END

YES

SELECT ONE PIECE OF UNEVALUATED PSEUDO
DATA, AND INFER PSEUDO DATA WITH MODEL A
TO OBTAIN FIRST CONFIDENCE LEVEL VECTOR VA
(INCLUDING CONFIDENCE LEVEL OF GROUND
TRUTH LABEL) — S13

INFER SELECTED PSEUDO DATA WITH MODEL B TO
OBTAIN SECOND CONFIDENCE LEVEL VECTOR VB — S14

S15
IS CONFIDENCE LEVEL
OF GROUND TRUTH LABEL OF FIRST
CONFIDENCE LEVEL VECTOR VA FIRST
REFERENCE VALUE OR MORE? — NO

YES

S16
IS DISTANCE BETWEEN
FIRST CONFIDENCE LEVEL VECTOR VA
AND SECOND CONFIDENCE LEVEL VECTOR VB
SECOND REFERENCE VALUE OR LESS? — NO

YES

S18
EXCLUDE PSEUDO
DATA FROM
TRAINING DATA
FOR THIRD CLASS
CLASSIFICATION
MODEL C

S17
SPECIFY PSEUDO
DATA AS TRAINING
DATA FOR THIRD
CLASS
CLASSIFICATION
MODEL C

# FIG. 8

```
        ╭─────────────────────────╮
        │    PSEUDO DATA          │
        │  SPECIFICATION START    │
        ╰─────────────────────────╯
                    │
                    ▼
┌───────────────────────────────────────────┐
│ PREPARE MODEL A TRAINED USING BASIC DATA   │── S21
│ AND MODEL B TRAINED USING PSEUDO DATA      │
└───────────────────────────────────────────┘
                    │
                    ▼
              ╱───────────╲                        S22
         ╱─────────────────────╲          NO
    ╱   DOES UNEVALUATED          ╲──────────────▶ ╭──────╮
    ╲   PSEUDO DATA REMAIN?       ╱                │ END  │
         ╲─────────────────────╱                   ╰──────╯
              ╲───────────╱
                    │ YES
                    ▼
┌───────────────────────────────────────────┐
│ SELECT ONE PIECE OF UNEVALUATED PSEUDO     │
│ DATA, AND INFER PSEUDO DATA WITH MODEL A   │── S23
│ TO OBTAIN FIRST CONFIDENCE LEVEL VECTOR VA │
│ (INCLUDING CONFIDENCE LEVEL OF GROUND      │
│ TRUTH LABEL)                               │
└───────────────────────────────────────────┘
                    │
                    ▼
┌───────────────────────────────────────────┐
│ INFER SELECTED PSEUDO DATA WITH MODEL B TO │── S24
│ OBTAIN SECOND CONFIDENCE LEVEL VECTOR VB   │
└───────────────────────────────────────────┘
                    │
                    ▼
         ╱──────────────────────╲              S25
   YES  ╱    IS CONFIDENCE LEVEL  ╲
  ◀─────  OF GROUND TRUTH LABEL OF FIRST
        ╲  CONFIDENCE LEVEL VECTOR VA FIRST ╱
         ╲ REFERENCE VALUE OR MORE?        ╱
          ╲──────────────────────╱
                    │ NO
                    ▼
         ╱──────────────────────╲              S26
   YES  ╱    IS DISTANCE BETWEEN  ╲     NO
  ◀─────  FIRST CONFIDENCE LEVEL VECTOR VA ─────┐
        ╲ AND SECOND CONFIDENCE LEVEL VECTOR VB ╱
         ╲ SECOND REFERENCE VALUE OR LESS?      ╱
          ╲──────────────────────╱
```

S28

┌─────────────────┐
│ EXCLUDE PSEUDO  │
│ DATA FROM       │
│ TRAINING DATA   │
│ FOR NEW CLASS   │
│ CLASSIFICATION  │
│ MODEL           │
└─────────────────┘

S27

┌─────────────────┐
│ SPECIFY PSEUDO  │
│ DATA AS TRAINING│
│ DATA FOR NEW    │
│ CLASS           │
│ CLASSIFICATION  │
│ MODEL           │
└─────────────────┘

## INTERNATIONAL SEARCH REPORT

| International application No. |
|---|
| **PCT/JP2022/016770** |

### A. CLASSIFICATION OF SUBJECT MATTER

*G06N 20/00*(2019.01)i
FI: G06N20/00

According to International Patent Classification (IPC) or to both national classification and IPC

### B. FIELDS SEARCHED

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | CHOQUETTE-CHOO, Christopher A. TRAMER, Florian. CARLINI, Nicholas. PAPERNOT, Nicolas. Label-Only Membership Inference Attacks. arXiv.org [online]. 05 December 2021, [retrieval date 14 June 2022], Internet<URL: https://arxiv.org/pdf/2007.14321.pdf> in particular, "3.3. Data Augmentation", "6.1. Training with Data Augmentation Exacerbates MI" | 1, 2, 5, 6, 9, 10 |
| A | in particular, "3.3. Data Augmentation", "6.1. Training with Data Augmentation Exacerbates MI" | 3, 4, 7, 8, 11, 12 |
| Y | SHORTEN, Connor. KHOSHGOFTAAR, Taghi M. A survey on Image Data Augmentation for Deep Learning. Journal of Big Data. vol. 6, Article number: 60, 06 July 2019, [retrieval date 14 June 2022], Internet<URL: https://journalofbigdata.springeropen.com/track/pdf/10.1186/s40537-019-0197-0.pdf>, <DOI: https://doi.org/10.1186/s40537-019-0197-0> in particular, "Adversarial training" | 1, 2, 5, 6, 9, 10 |
| A | in particular, "Adversarial training" | 3, 4, 7, 8, 11, 12 |

☑ Further documents are listed in the continuation of Box C.          ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **14 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/016770**

### C. DOCUMENTS CONSIDERED TO BE RELEVANT

| Category* | Citation of document, with indication, where appropriate, of the relevant passages | Relevant to claim No. |
|---|---|---|
| A | 先崎　佑弥、大畑　幸矢、松浦　幹太, 深層学習における Adversarial Training による副作用とその緩和策, Computer Security Symposium 2017. 25 October 2017, pp. 385-392, [retrieval date 14 June 2022], Internet<URL: https://ipsj.ixsq.nii.ac.jp/ej/? action=repository_uri&item_id=187230&file_id=1&file_no=1><br>in particular, "2.2 Adversarial Examples", (SENZAKI, Yuya. OHATA, Satsuya. MATSUURA, Kanta. Negative Side Effect of Adversarial Training in Deep Learning and Its Mitigation.) | 1-12 |

Form PCT/ISA/210 (second sheet) (January 2015)

**EP 4 502 877 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021107970 A
- JP 2019159961 A
- US 20070143284